# EUROPÄISCHE PATENTSCHRIFT

(11) **EP 2 347 077 B1**
(45) Veröffentlichungstag und Bekanntmachung des Hinweises auf die Patenterteilung: **17.08.2016**
(21) Anmeldenummer: 09778865.7
(22) Anmeldetag: 08.10.2009
(51) Int. Cl.: E05F 15/40, E05F 15/611, E05F 15/622

(54) **ANTRIEBSANORDNUNG ZUR MOTORISCHEN VERSTELLUNG EINES VERSCHLUSSELEMENTS IN EINEM KRAFTFAHRZEUG**
DRIVING ARRANGEMENT FOR THE MOTORIZED DISPLACEMENT OF A CLOSURE ELEMENT IN A MOTOR VEHICLE
AGENCEMENT D'ENTRAINEMENT POUR LA COMMANDE MOTORISEE D'UN ELEMENT DE FERMETURE D'UN VEHICULE AUTOMOBILE

(30) Priorität: 12.11.2008 DE 102008057014
(43) Veröffentlichungstag der Anmeldung: 27.07.2011
(73) Patentinhaber: Brose Schliesssysteme GmbH & Co. KG, 42369 Wuppertal (DE)
(72) Erfinder: EGGELING, Jürgen, 45475 Mülheim an der Ruhr (DE); HELLMICH, Dirk, 47249 Duisburg (DE); DÜNNE, Klaus, 40882 Ratingen (DE)
(74) Vertreter: Gottschald, Jan
(86) Internationale Anmeldenummer: PCT/EP2009/007222
(87) Internationale Veröffentlichungsnummer: WO 2010/054725

(56) Entgegenhaltungen:
- DE-U1-202007 002 306
- GB-A- 2 400 890
- US-B1- 6 516 567

## Beschreibung

Die Erfindung betrifft eine Antriebsanordnung zur motorischen Verstellung eines Verschlußelementes in einem Kraftfahrzeug gemäß dem Oberbegriff von Anspruch 1 sowie eine Verschlußelementanordnung in einem Kraftfahrzeug gemäß dem Oberbegriff von Anspruch 15.

Der Begriff "Verschlußelement" ist vorliegend umfassend zu verstehen. Hierunter fallen Heckklappen, Heckdeckel, Motorhauben, Seitentüren, Schiebetüren, Hubdächer, Schiebefenster etc..

In erster Linie findet die in Rede stehende Antriebsanordnung allerdings Anwendung bei Heckklappen und Seitentüren in Kraftfahrzeugen. Sie dienen der motorischen Verstellung des jeweiligen Verschlußelements in Schließrichtung und in Öffnungsrichtung.

Die bekannte Antriebsanordnung (DE 20 2005 007 155 U1) ist einer Heckklappe eines Kraftfahrzeugs zugeordnet. Die Antriebsanordnung ist mit zwei Spindelantrieben ausgestattet, die jeweils in einer kompakten Baueinheit einen Antriebsmotor, ein Zwischengetriebe mit Kupplung und ein Spindel-Spindelmutter-Getriebe aufweisen. In der jeweiligen Baueinheit ist eine Federanordnung vorgesehen, die der Gewichtskraft der zugeordneten Heckklappe entgegenwirkt.

Die bekannte Antriebsanordnung weist ferner eine Antriebssteuerung auf, die der Ansteuerung der beiden Antriebe, insbesondere der beiden Antriebsmotoren, dient. Die Antriebe sind regelmäßig jeweils mit einem Sensor zur Erfassung der Antriebsbewegung ausgestaltet. Mit der bekannten Antriebsanordnung lassen sich Heckklappen von beträchtlicher Größe und/oder beträchtlichem Gewicht motorisch verstellen. Dies eröffnet neue Freiheitsgrade bei der Auslegung solcher Heckklappen. Mit der Steigerung des Gewichts ist grundsätzlich aber auch ein erhöhtes Risiko bei einem Ausfall der Antriebsanordnung verbunden.

Im ungünstigsten Fall bricht die antriebstechnische Kopplung zwischen der Antriebsanordnung und der Heckklappe, was hier zu einem schlagartigen Zufallen der Heckklappe führen würde. Dies ist mit einer erheblichen Einschränkung der Betriebssicherheit der Heckklappenanordnung insgesamt verbunden.

Eine Antriebsanordnung für eine Heckklappe eines Kraftfahrzeugs mit einem einzigen Heckklappensensor, der zur Erfassung eines Feblerzustandes genutzt werden kann, zeigt die GB 2400890 A welches Dokument die Merkmale des Oberbegriffs des Anspruchs 1 offenbart. Die Antriebsanordnung weist neben dem Heckklappensensor einen Antrieb und eine Antriebssteuerung auf. Ein gravitationsbedingtes Zufallen der Heckklappe wird mittels der Antriebssteuerung basierend auf den Sensordaten des Heckklappensensors erfasst. Je nach Fallgeschwindigkeit leitet die Antriebssteuerung das Schalten einer Kupplung und damit das Bremsen der Heckklappe ein.

Der Erfindung liegt das Problem zugrunde, die bekannte Antriebsanordnung derart auszugestalten und weiterzubilden, daß die Betriebssicherheit erhöht wird.

Das obige Problem wird bei einer Antriebsanordnung mit den Merkmalen des Oberbegriffs von Anspruch 1 durch die Merkmale des kennzeichnenden Teils von Anspruch 1 gelöst.

Wesentlich ist, daß die Antriebssteuerung die Sensorsignale der Sensoren der Antriebe auf einen Fehlerzustand hin überwacht und bei der Erfassung eines Fehlerzustands einen Not-Bremsbetrieb und/oder einen Not-Haltebetrieb einleitet. Es ist hier erkannt worden, daß die an sich der Bewegungssteuerung dienenden Sensorsignale dafür genutzt werden können, Abweichungen vom normalen Betriebszustand zu erfassen.

Bei dem zu überwachenden Fehlerzustand handelt es sich um ein fehlerbedingtes Zufallen des Verschlußelements. Dieser Fehlerzustand steht vorliegend im Vordergrund.

Im Einzelnen liegt der Lehre der Fehlerzustand zugrunde, daß einer der beiden Antriebe der Antriebsanordnung außer Eingriff von dem Verschlußelement kommt, was wieder zu einem fehlerbedingten Zufallen des Verschlußelements führt. Dieser Fehlerzustand wird vorschlagsgemäß dadurch erkannt, daß die Sensorsignale der beiden Sensoren miteinander korreliert werden. Im einfachsten Falle erfolgt hier ein Vergleich der Sensorsignale der beiden Sensoren.

Bei der besonders bevorzugten Ausgestaltung gemäß Anspruch 7 ist erkannt worden, daß die Antriebsmotoren der Antriebe ohne weiteres so angesteuert werden kann bzw. können, daß die für den Not-Bremsbetrieb bzw. den Not-Haltebetrieb notwendige Bremswirkung erzielt wird.

Es gibt jedenfalls zwei Möglichkeiten, die angesprochene bremsende Wirkung des Antriebsmotors zu erzeugen.

Eine bevorzugte Möglichkeit besteht gemäß Anspruch 9 darin, die Antriebsmotoren, vorzugsweise gepulst, mit einer Kurzschlußschaltung zu beschalten. Dadurch wird eine Bremswirkung erzeugt, die auf die Lorentz-Kraft zurückgeht.

Eine andere bevorzugte Möglichkeit zur Erzeugung der bremsenden Wirkung der Antriebsmotoren besteht gemäß Anspruch 11 darin, die Antriebsmotoren mit einer vorzugsweise gepulsten Gegenspannung und/oder mit einem vorzugsweise gepulsten Gegenstrom zu beaufschlagen. Dadurch läßt sich eine noch höhere Bremswirkung als mit der Kurzschlußbremsung erzielen.

Nach einer weiteren Lehre gemäß Anspruch 15, der ebenfalls eigenständige Bedeutung zukommt, wird eine Verschlußelementanordnung, die ein Verschlußelement einerseits und eine Antriebsanordnung gemäß der ersten Lehre andererseits aufweist, als solche beansprucht. Auf die Ausführungen zu möglichen Varianten des Verschlußelements und der Antriebsanordnung darf in vollem Umfange verwiesen werden.

Weitere Einzelheiten, Merkmale, Ziele und Vorteile der vorliegenden Erfindung werden nachfolgend anhand der Zeichnung eines bevorzugten Ausführungsbeispiels näher erläutert. In der Zeichnung zeigt
- Fig. 1: das Heck eines Kraftfahrzeugs in einer Seitenansicht mit einer Heckklappe und einer vorschlagsgemäßen Antriebsanordnung zur motorischen Verstellung der Heckklappe,
- Fig. 2: einen Antrieb der Antriebsanordnung gemäß Fig. 1 in einer Schnittdarstellung,
- Fig. 3: schematisch das Regelsystem der Antriebssteuerung der Antriebsanordnung gemäß Fig. 1 und
- Fig. 4: die Leistungsendstufe der Antriebssteuerung der Antriebsanordnung gemäß Fig. 1.

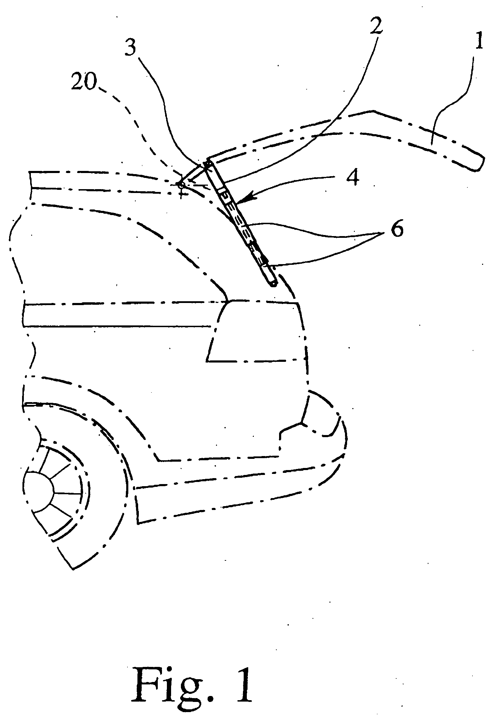

Die in Fig. 1 dargestellte Antriebsanordnung dient der motorischen Verstellung einer Heckklappe 1 in einem Kraftfahrzeug. Es sind aber auch alle anderen im einleitenden Teil der Beschreibung angesprochenen Verschlußelemente vorteilhaft anwendbar. Alle folgenden Ausführungen zu einer Heckklappe gelten entsprechend gleichermaßen für alle anderen angesprochenen Verschlußelemente.

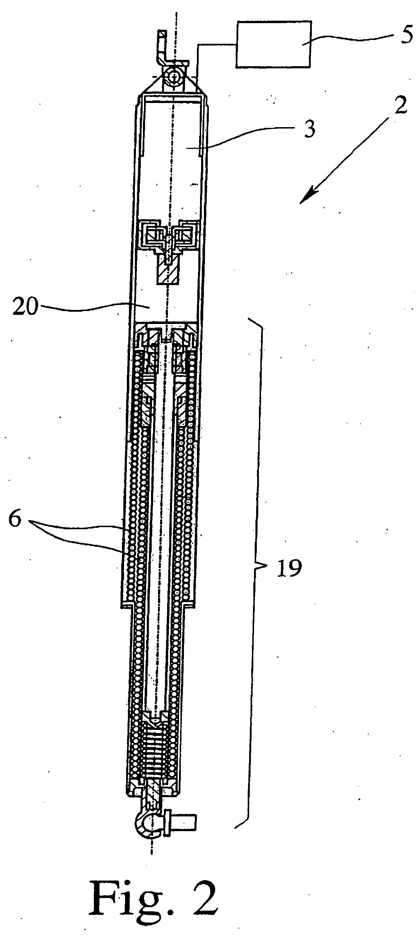

Der in Fig. 1 dargestellten Antriebsanordnung sind jedoch zwei identische Antriebe 2, die jeweils einen Antriebsmotor 3 aufweisen, zugeordnet. Die Antriebe 2 sind in den beiden seitlichen Bereichen einer Heckklappenöffnung 4 angeordnet. In Fig. 1 ist nur einer der beiden Antriebe 2 dargestellt. Fig. 2 zeigt diesen Antrieb 2 in einer Schnittansicht.

Die folgenden Ausführungen betreffen fast durchweg nur den einen in Fig. 1 erkennbaren Antrieb 2. Sie gelten aber gleichermaßen für weitere vorhandene Antriebe.

Es ist ferner eine Antriebssteuerung 5 vorgesehen, die den Antrieben 2 zugeordnet ist. Diese wird weiter unten noch näher erläutert.

Allen Ausführungsbeispielen ist gemeinsam, daß die Heckklappe 1 im motorischen Verstellbetrieb mittels des Antriebsmotors 3 in Schließrichtung und in Öffnungsrichtung zwischen einer Schließstellung und einer Öffnungsstellung antreibbar ist.

Im montierten Zustand ist die Anordnung so getroffen, daß die Gewichtskraft des Verschlußelements 1 in Schließrichtung wirkt. Dabei sind die Antriebe 2 hier nicht selbsthemmend ausgestaltet, so daß die Gewichtskraft des Verschlußelements 1 grundsätzlich eine Schließbewegung des Verschlußelements 1 auslösen kann. Um dies zu verhindern, ist regelmäßig eine Vorspannung der Antriebe 2 und/oder des Verschlußelements 1 vorgesehen, wie noch erläutert wird.

Der Antrieb 2 ist mit einem nicht dargestellten Sensor zur Erfassung der Antriebsbewegung ausgestattet. Bei dem Sensor handelt es sich vorzugsweise um einen Hall-Sensor, der mit einem an einer Antriebswelle angeordneten Magneten zusammenwirkt.

Wesentlich ist nun, daß die Antriebssteuerung 5 die Sensorsignale auf einen Fehlerzustand hin überwacht und bei der Erfassung eines Fehlerzustands einen Not-Bremsbetrieb und/oder einen Not-Haltebetrieb einleitet.

In erster Linie ist es hier vorgesehen, daß die Antriebssteuerung 5 die Sensorsignale auf ein fehlerbedingtes Zufallen des Verschlußelements 1 überwacht. Ein solches fehlerbedingtes Zufallen kann insbesondere dadurch verursacht sein, daß eine Antriebskomponente der Antriebsanordnung bricht. Um welche Antriebskomponente es sich hier handeln kann, wird weiter unten noch erläutert.

Speziell bei einem Bruch einer Antriebskomponente wird die Zufallbewegung sprunghaft erfolgen. Vor diesem Hintergrund ist es vorzugsweise vorgesehen, daß die Antriebssteuerung 5 zur Erfassung eines fehlerbedingten Zufallens des Verschlußelements 1 die Sensorsignale auf sprunghafte Signalabweichungen hin überprüft. Klarstellend darf darauf hingewiesen werden, daß hiermit eine Abweichung gegenüber dem im Normalbetrieb auftretenden Signalverlauf gemeint ist.

Es wurde weiter oben schon angesprochen, daß ein fehlerbedingtes Zufallen des Verschlußelements 1 darauf zurückgehen kann, daß einer der Antriebe 2 außer Eingriff von dem Verschlußelement 1 kommt. Dies ist bei dem dargestellten Ausführungsbeispiel beispielsweise der Fall, wenn beim Beladen bei geöffneter Heckklappe 1 versehentlich ein harter Stoß auf einen der Antriebe 2 ausgeübt wird, durch den die antriebstechnische Kopplung zwischen dem Antrieb 2 und der Heckklappe 1 und/oder der Kraftfahrzeugkarosserie bricht. Regelmäßig folgt hieraus das Zufallen der Heckklappe 1 aufgrund des Klappengewichts.

Für den obigen Fall ist es sachgerecht, daß die Antriebsanordnung 5 nur für denjenigen Antrieb 2 einen Not-Bremsbetrieb und/oder einen Not-Haltebetrieb einleitet, der der fehlerbedingten Zufallbewegung der Heckklappe 1 folgt. Von besonderem Vorteil ist diese Art der Ansteuerung für den Fall, daß der Not-Bremsbetrieb und/oder der Not-Haltebetrieb auf ein Gegenbestromen des Antriebs 2 zurückgeht, wie noch erläutert wird.

Bei der Antriebsanordnung mit zwei Antrieben 2, die jeweils einen Sensor aufweisen, läßt sich die Erfassung eines fehlerbedingten Zufallens des Verschlußelements 1 dadurch realisieren, daß die Sensorsignale der beiden Sensoren miteinander korreliert werden. Damit ist gemeint, daß die Sensorsignale der beiden Sensoren auf irgendeine Weise miteinander verarbeitet werden, so daß aus dem Ergebnis der Verarbeitung das Vorliegen des Fehlerzustandes erkannt werden kann.

Im einfachsten Fall sind die Sensorsignale der beiden Sensoren im Normalbetrieb weitgehend identisch zueinander. Dies ist auch bei dem dargestellten Ausführungsbeispiel mit identischen Antrieben 2 der Fall. Insbesondere dann genügt es, daß die Sensorsignale der beiden Sensoren miteinander verglichen werden, wobei das Überschreiten einer vorbestimmten Signalabweichung das Auftreten des Fehlerzustandes impliziert.

Beispielsweise kann es aber auch vorgesehen sein, daß die Antriebssteuerung 5 zur Erfassung eines fehlerbedingten Zufallens des Verschlußelements 1 das Überschreiten einer vorbestimmten Grenzdifferenz in der Antriebsgeschwindigkeit oder des zurückgelegten Antriebswegs der beiden Antriebe 2 überwacht. Andere Möglichkeiten der Erfassung des Fehlerzustands sind denkbar.

Vorzugsweise ist es vorgesehen, daß der Antrieb 2 in Öffnungsrichtung vorgespannt ist und zwar so, daß die Vorspannung der Gewichtskraft der Heckklappe 1 entgegenwirkt. Dies wird weiter unten noch näher erläutert. Eine solche Vorspannung führt bei dem obigen "Abreißen" eines Antriebs 2 regelmäßig dazu, daß der Antrieb 2, bedingt durch die Vorspannung, eine sprungartige Antriebsbewegung in Öffnungsrichtung durchführt. Vor diesem Hintergrund ist es vorzugsweise vorgesehen, daß die Antriebssteuerung 5 die Sensorsignale auf den Fehlerzustand einer sprungartigen, insbesondere durch eine Vorspannung des Antriebs 2 verursachten Antriebsbewegung in Öffnungsrichtung überwacht.

In diesem Zusammenhang ist es weiter vorzugsweise vorgesehen, daß die Antriebsanordnung 5 nur für denjenigen Antrieb 2 einen Not-Bremsbetrieb und/oder einen Not-Haltebetrieb einleitet, für den eben gerade keine sprungartige Antriebsbewegung in Öffnungsrichtung erfaßt worden ist.

Es sind verschiedene Möglichkeiten für die Realisierung des Not-Bremsbetriebs und des Not-Haltebetriebs denkbar.

Denkbar ist beispielsweise, daß die Antriebsanordnung eine ansteuerbare Bremsanordnung aufweist und daß die Antriebssteuerung 5 zum Einleiten des Not-Bremsbetriebs und/oder des Not-Haltebetriebs die Bremsanordnung entsprechend ansteuert. Bei entsprechender Auslegung der Bremsanordnung läßt sich die notwendige Bremswirkung schnell und sicher erzielen.

In besonders bevorzugter Ausgestaltung ist es allerdings vorgesehen, daß die Antriebssteuerung 5 den Antriebsmotor 3 zum Einleiten des Not-Bremsbetriebs und/oder des Not-Hältebetriebs derart ansteuert, daß er hinsichtlich einer Verstellung des Verschlußelements 1 bremsend wirkt. Vorteilhaft ist hierbei die Tatsache, daß auf zusätzliche konstruktive Maßnahmen, wie die Bereitstellung einer Bremsanordnung, verzichtet werden kann.

Die Gewichtskraft der Heckklappe 1 kann von beträchtlicher Größe sein, so daß vorzugsweise eine Federanordnung 6 vorgesehen ist, die jedenfalls über einen Verstellbereich der Heckklappe 1 die Gewichtskraft der Heckklappe 1 kompensiert. Damit soll in der Regel erreicht werden, daß sich die Heckklappe 1 stets in der Nähe des Gleichgewichtszustands befindet. Es kann aber auch vorteilhaft sein, eine Überkompensation derart vorzusehen, daß die Heckklappe 1 in Öffnungsrichtung drängt. Hier und vorzugsweise bewirkt die Federanordnung 6 die oben schon angesprochene Vorspannung des Antriebs 2 in Öffnungsrichtung. Denkbar ist aber auch, daß separat vom Antrieb 2 eine Federanordnung vorgesehen ist. Regelmäßig handelt es sich hierbei um Gasdruckfedern oder dergleichen.

Mit allen Federanordnungen, die der Gewichtskraft der Heckklappe 1 entgegenwirken, ist im Falle des Federbruchs der potentielle Fehlerzustand des ungewünschten Zufallens der Heckklappe 1 verbunden.

Grundsätzlich ist es denkbar, daß das Bremsen des Antriebsmotors 3 zum Einleiten des Not-Bremsbetriebs und/oder des Not-Haltebetriebs ungeregelt erfolgt. Vorzugsweise ist es aber so, daß das Bremsen des Antriebsmotors 3 geregelt erfolgt.

Die Antriebssteuerung 5 weist vorzugsweise einen Regelkreis 7 zur Regelung der motorischen Verstellung der Heckklappe 1 auf, wobei der Regelkreis 7 im motorischen Verstellbebrieb in üblicher Weise aufgrund einer Regelabweichung 8 eine Stellgröße 9 erzeugt und wobei der Antriebsmotor 3 in Abhängigkeit von der Stellgröße 9 geregelt antreibend oder geregelt bremsend wirkt. Mit "geregelt antreibend" und "geregelt bremsend" ist vorliegend gemeint, daß die bremsende Wirkung nicht nur ein- und ausgeschaltet wird, sondern, wie die antreibende Wirkung des Antriebsmotors 3 auch, "dosiert" wird. Bevorzugte Varianten einer solchen dosierten "Bremsung" werden noch erläutert.

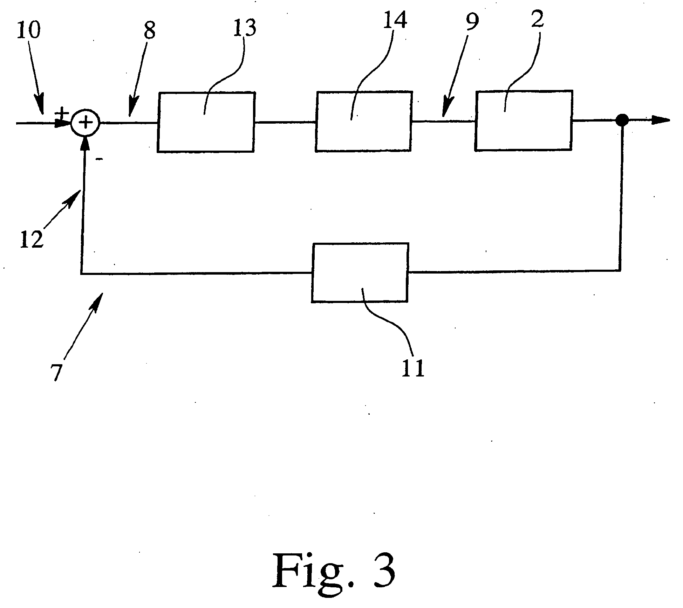

Der obige Regelkreis 7 ist beispielhaft in Fig. 3 dargestellt. Eine Führungsgröße 10, die beispielsweise die Sollgeschwindigkeit der Heckklappe 1 repräsentiert, wird mit einer von einem Sensor 11 gemessenen Ist-Größe 12 verglichen und in die oben angesprochene Regelabweichung 8 umgewandelt. Bei dem Sensor 11 handelt es sich vorzugsweise um den Sensor einer der beiden Antriebe 2. Basierend auf der Regelabweichung 8 wird in dem Regler 13 und in einem nachgeschalteten Stellglied 14 die ebenfalls oben angesprochene Stellgröße 9 für den Antrieb 2, insbesondere für den Antriebsmotor 3 erzeugt.

Bei der Ausstattung der Antriebssteuerung 5 mit einem Regelkreis 7 können die obigen Fehlerzustände auf besonders einfache Weise erfaßt werden. Eine solche Erfassung geht dann auf die Erfassung einer sprungartigen Regelabweichung, beispielsweise hervorgerufen durch den mechanischen Bruch einer dem Antrieb 2 zugeordneten Federanordnung 6, zurück.

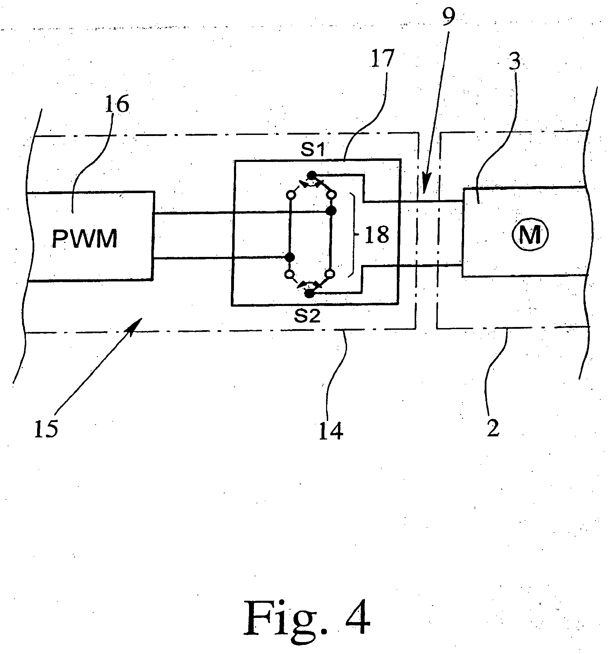

Fig. 4 zeigt eine dem Antriebsmotor 3 zugeordnete Leistungsendstufe 15, die auf einen PWM (Puls-Weiten-Modulation)-Generator 16 als Spannungsquelle und eine dem PWM-Generator 16 nachgeschaltete Schalteinheit 17 aufweist. Die Schalteinheit 17 dient zunächst der bidirektionalen Beschaltung des Antriebsmotors 3 mit der gepulsten Versorgungsspannung, was für die bidirektionale Verstellung der Heckklappe 1 in Schließrichtung und in Öffnungsrichtung erforderlich ist. Hierfür weist die Schalteinheit 17 die Schalter S1 und S2 auf, die je nach Verstellrichtung wechselweise geschaltet werden. In der einen Verstellrichtung befindet sich die Schaltfahne des Schalters S1 in der rechten Stellung und die Schaltfahne des Schalters S2 in der linken Stellung. Entsprechend umgekehrt verhält es sich bei der entgegengesetzten Verstellrichtung.

Eine besonders einfache Möglichkeit der Realisierung der obigen Bremswirkung des Antriebsmotors 3 ist ebenfalls in Fig. 4 gezeigt. Hier und vorzugsweise beschaltet die Antriebssteuerung 5 den Antriebsmotor 3 zur Erzeugung der Bremswirkung für den Not-Bremsbetrieb und/oder den Not-Haltebetrieb mit einer Kurzschlußschaltung 18. Dies ist der Fall, wenn die Schaltfahnen der beiden in Fig. 4 dargestellten Schalter S1 und S2 in der rechten Stellung stehen (Fig. 4).

Die in Fig. 4 dargestellte Variante einer Kurzschlußbremsung ist einfach zu realisieren, ermöglicht aber noch keine "dosierte" Bremsung. Dies läßt sich grundsätzlich dadurch erreichen, daß die Antriebssteuerung 5 den Antriebsmotor 3 zur Erzeugung der Bremswirkung gepulst mit einer Kurzschlußschaltung 18 beschaltet. Dies erfolgt vorzugsweise in Puls-Weiten-Modulation.

Bei der in Fig. 4 dargestellten und insoweit bevorzugten Ausgestaltung ist die Kurzschlußschaltung 18 nach Art einer idealen elektrischen Kurzschlußbrücke ausgestaltet. Denkbar ist aber auch die Ausgestaltung der Kurzschlußschaltung 18 nach Art einer Widerstandsbrücke, wobei weiter vorzugsweise die Wirkung der Kurzschlußschaltung 18 mittels der Antriebssteuerung 5 einstellbar ist, indem der Widerstandswert der Widerstandsbrücke mittels der Antriebssteuerung 5 einstellbar ist.

Für die schaltungstechnische Realisierung der bidirektionalen Ansteuerung einerseits und der Kurzschlußbremsung andererseits sind zahlreiche Varianten denkbar. Die Schalteinheit 17 kann beispielsweise als Relais ausgestaltet sein. Möglich ist aber auch, die bidirektionale Ansteuerung als Vollbrücke vorzugsweise in einem integrierten Bauteil und die Kurzschlußbremsung in einem separaten Relais zu realisieren.

Die erläuterte Bremswirkung des Antriebsmotors durch Kurzschließen beruht wie oben abgesprochen auf dem Lorentz-Prinzip. Dies bedeutet aber, daß hierdurch ein Bremsen bis zum Stillstand bei einer andauernden Belastung der Heckklappe 1, beispielsweise durch Gewichtskraft, nicht realisierbar ist.

Alternativ oder zusätzlich ist es daher vorzugsweise vorgesehen, daß die Antriebssteuerung 5 den Antriebsmotor 3 zur Erzeugung einer Bremswirkung mit einer Gegenspannung und/oder mit einem Gegenstrom beaufschlagt, die bzw. der der jeweiligen Verstellbewegung entgegenwirkt. Dies ist ohne weiteres mit der in Fig. 3 dargestellten Leistungsendstufe 15 realisierbar, da die Antriebsrichtung durch eine wechselweise Beschaltung der Schalter S1 und S2 ja umkehrbar ist. Um auch hier ein "dosiertes" Bremsen zu ermöglichen, beaufschlagt die Antriebssteuerung 5 den Antriebsmotor 3 zur Erzeugung der Bremswirkung vorzugsweise mit einer gepulsten Gegenspannung und/oder mit einem gepulsten Gegenstrom, wobei die Gegenspannung und/oder der Gegenstrom weiter vorzugsweise nach Art eines Puls-Weiten-Signals gepulst sind. Das dosierte Bremsen läßt sich aber auch einfach durch die Einstellung der Höhe der Gegenspannung bzw. des Gegenstroms realisieren. Beim Fehlerzustand des "Abreißens" eines der Antriebe 2 erfolgt das Bremsen mit Gegenspannung bzw. mit Gegenstrom vorzugsweise nur bei dem verbleibenden, in antriebstechnischem Eingriff stehenden Antrieb 2. Andernfalls würde der abgerissene Antrieb 2 eine Antriebsbewegung in Öffnungsrichtung durchführen, was gegebenenfalls mit einer Verletzungsgefahr für den Benutzer verbunden ist. Dieses Grundkonzept des "einseitigen" Bremsens wurde weiter oben schon angesprochen.

Je nach Ausgestaltung des Verschlußelements 1 ist der Not-Haltebetrieb mit einer ständigen Leistungsaufnahme durch den Antriebsmotor 3 verbunden. Dies ist bei der in Fig. 1 dargestellten Heckklappe 1 aufgrund der Wirkung der Gewichtskraft der Fall. Aus diesem Grunde ist es vorzugsweise vorgesehen, daß die Antriebssteuerung 5 nur für eine vorbestimmte Haltezeit in dem Haltebetrieb verbleibt und nach Ablauf der Haltezeit eine vorzugsweise motorische Rückstellung der Heckklappe 1 vorzugsweise in die Schließstellung einleitet. In besonders bevorzugter Ausgestaltung erfolgt die Rückstellung mit reduzierter Geschwindigkeit. Es hat sich herausgestellt, daß Haltezeiten zwischen 20 und 30 Minuten zu einem guten Kompromiß zwischen Energieverbrauch einerseits und Benutzungskomfort andererseits führen.

Bei dem obigen geregelten Halten der Heckklappe 1 wird die Heckklappe 1 laufend gebremst und angetrieben. Das Bremsen erfolgt dabei durch die oben angesprochene Beaufschlagung des Antriebsmotors 3 mit einer Gegenspannung und/oder einem Gegenstrom. Mit der obigen Kurzschlußbremsung ist eine Rückführung der Heckklappe 1 von einer ausgelenkten Stellung in die Haltestellung selbstredend nicht möglich.

Die vorschlagsgemäße Ausnutzung der Bremswirkung eines Antriebsmotors 3 läßt sich auf alle möglichen konstruktiven Varianten von Antrieben frei anwenden. Ein besonders bevorzugter Antrieb 2 ist in Fig. 2 dargestellt. Neben dem Antriebsmotor 3 weist der Antrieb 2 ein dem Antriebsmotor 3 nachgeschaltetes Spindel-Spindelmutter-Getriebe 19 auf, wobei zwischen dem Antriebsmotor 3 und dem Spindel-Spindelmutter-Getriebe 19 hier und vorzugsweise ein Zwischengetriebe 20 einschließlich einer Kupplung geschaltet ist. Die Federanordnung 6 ist in den Antrieb 2 integriert, so daß sich insgesamt eine besonders kompakte Ausgestaltung ergibt. Hinsichtlich der konstruktiven Ausgestaltung des Antriebs 2 insbesondere hinsichtlich der konstruktiven Ausgestaltung der Federanordnung 6, darf auf die deutsche Anmeldung DE 20 2005 007 155 U1 verwiesen werden, die auf die Anmelderin zurückgeht und die hiermit in vollem Umfange zum Gegenstand der vorliegenden Anmeldung gemacht wird.

Es wurde schon darauf hingewiesen, daß die vorschlagsgemäße Lehre auf alle Arten von Verschlußelementen 1 in einem Kraftfahrzeug angewandt werden kann. Vorzugsweise ist das Verschlußelement 1 jedoch als Klappe, insbesondere als Heckklappe 1 oder als Heckdeckel, ausgestaltet.

Nach einer weiteren Lehre, der ebenfalls eigenständige Bedeutung zukommt, wird eine Verschlußelementanordnung, insbesondere eine Heckklappenanordnung, in einem Kraftfahrzeug beansprucht, das ein Verschlußelement und eine Antriebsanordnung - wie oben erläutert - aufweist. Auf die obigen Ausführungen darf in vollem Umfange verwiesen werden.

## Patentansprüche

1. Antriebsanordnung zur motorischen Verstellung eines Verschlußelements (1) in einem Kraftfahrzeug, wobei mindestens ein Antrieb (2) mit einem Antriebsmotor (3) und eine Antriebssteuerung (5) vorgesehen sind, wobei das Verschlußelement (1) im motorischen Verstellbetrieb mittels des Antriebsmotors (3) in Schließrichtung und in Öffnungsrichtung zwischen einer Schließstellung und einer Öffnungsstellung antreibbar ist, wobei der Antrieb (2) nicht selbsthemmend ausgestaltet ist, wobei der Antrieb (2) einen Sensor, insbesondere einen HallSensor, zur Erfassung der Antriebsbewegung aufweist, wobei die Antriebssteuerung (5) die Sensorsignale auf einen Fehlerzustand überwacht und bei der Erfassung eines Fehlerzustands einen Not-Bremsbetrieb und/oder einen Not-Haltebetrieb einleitet,
**dadurch gekennzeichnet,**
**daß** die Antriebsanordnung zwei Antriebe (2) mit jeweils einem Sensor zur Ermittlung der jeweiligen Antriebsbewegung umfasst und daß die Antriebssteuerung (5) zur Erfassung eines fehlerbedingten Zufallens des Verschlusselements (1), z.B. wenn einer der beiden Antriebe der Antriebsanordnung außer Eingriff von dem Verschlußelement kommt, die Sensorsignale der beiden Sensoren miteinander korreliert, insbesondere miteinander vergleicht.

2. Antriebsanordnung nach Anspruch 1, **dadurch gekennzeichnet, daß** die Antriebssteuerung (5) zur Erfassung eines fehlerbedingten Zufallens des Verschlusselements (1) die Sensorsignale auf sprunghafte Signalabweichungen überwacht.

3. Antriebsanordnung nach einem der vorhergehenden Ansprüche, **dadurch gekennzeichnet, daß** die Antriebsanordnung nur für denjenigen Antrieb (2) einen Not-Bremsbetrieb und/oder einen Not-Haltebetrieb einleitet, der einer fehlerbedingten Zufallbewegung des Vers chlusselements (1) folgt.

4. Antriebsanordnung nach einem der vorhergehenden Ansprüche, **dadurch gekennzeichnet, daß** die Antriebssteuerung (5) zur Erfassung eines fehlerbedingten Zufallens des Verschlusselements (1) das Überschreiten einer vorbestimmten Grenzdifferenz in der Antriebsgeschwindigkeit oder des Antriebswegs der beiden Antriebe (2) überwacht.

5. Antriebsanordnung nach einem der vorhergehenden Ansprüche, **dadurch gekennzeichnet, daß** die Antriebssteueuerung (5) die Sensorsignale auf den Fehlerzustand einer sprunghaften, insbesondere durch eine Vorspannung des Antriebs (2) verursachten Antriebsbewegung in Öffnungsrichtung überwacht, vorzugsweise, daß die Antriebsanordnung nur für denjenigen Antrieb (2) einen Not-Bremsbetrieb und/oder einen Not-Haltebetrieb einleitet, für den keine sprunghafte Antriebsbewegung in Öffnungsrichtung erfasst worden ist.

6. Antriebsanordnung nach einem der vorhergehenden Ansprüche, **dadurch gekennzeichnet, daß** die Antriebsanordnung eine ansteuerbare Bremsanordnung aufweist und daß die Antriebssteuerung (5) zum Einleiten des Not-Bremsbetriebs und/oder des Not-Haltebetriebs die Bremsanordnung entsprechend ansteuert.

7. Antriebsanordnung nach einem der vorhergehenden Ansprüche, **dadurch gekennzeichnet, daß** die Antriebssteuerung (5) die Antriebsmotoren (3) zum Einleiten des Not-Bremsbetriebs und/oder des Not-Haltebetriebs derart ansteuert, daß sie hinsichtlich einer Verstellung des Verschlußelements (1) bremsend wirken.

8. Antriebsanordnung nach einem der vorhergehenden Ansprüche, **dadurch gekennzeichnet, daß** die Antriebssteuerung (5) einen Regelkreis (7) zur Regelung der motorischen Verstellung des Verschlußelements (1) umfaßt, daß der Regelkreis (7) im motorischen Verstellbetrieb aufgrund einer Regelabweichung eine Stellgröße (9) erzeugt und daß die Antriebsmotoren (3) in Abhängigkeit von der Stellgröße (9) geregelt antreibend oder geregelt bremsend wirken.

9. Antriebsanordnung nach einem der vorhergehenden Ansprüche, **dadurch gekennzeichnet, daß** die Antriebssteuerung (5) die Antriebsmotoren (3) zur Erzeugung einer Bremswirkung für den Not-Bremsbetrieb und/oder den Not-Haltebetrieb mit einer Kurzschlußschaltung (18) beschaltet, vorzugsweise, daß die Antriebssteuerung (5) die Antriebsmotoren (3) zur Erzeugung einer Bremswirkung gepulst mit einer Kurzschlußschaltung (18) beschaltet, vorzugsweise, daß die gepulste Beschaltung in Puls-Weiten-Modulation erfolgt.

10. Antriebsanordnung nach Anspruch 9, **dadurch gekennzeichnet, daß** die Kurzschlußschaltung (18) nach Art einer idealen elektrischen Kurzschlußbrücke ausgestaltet ist, oder, daß die Kurzschlußschaltung (18) nach Art einer Widerstandsbrücke ausgestaltet ist, vorzugsweise, daß die Wirkung der Kurzschlußschaltung (18) mittels der Antriebssteuerung (5) einstellbar ist, indem der Widerstandswert der Widerstandsbrücke mittels der Antriebssteuerung (5) einstellbar ist.

11. Antriebsanordnung nach einem der vorhergehenden Ansprüche, **dadurch gekennzeichnet, daß** die Antriebssteuerung (5) die Antriebsmotoren (3) zur Erzeugung einer Bremswirkung mit einer Gegenspannung und/oder mit einem Gegenstrom beaufschlagt, die bzw. der der jeweiligen Verstellbewegung entgegenwirkt, vorzugsweise, daß die Antriebssteuerung (5) die Antriebsmotoren (3) zur Erzeugung einer Bremswirkung mit einer gepulsten Gegenspannung und/oder einem gepulsten Gegenstrom beaufschlagt, weiter vorzugsweise, daß die Gegenspannung und/oder der Gegenstrom nach Art eines Puls-Weiten-Signals gepulst sind.

12. Antriebsanordnung nach einem der vorhergehenden Ansprüche, **dadurch gekennzeichnet, daß** die Antriebe (2) ein den Antriebsmotoren (3) nachgeschaltetes Spindel-Spindelmutter-Getriebe (19) aufweisen, vorzugsweise, daß zwischen den Antriebsmotoren (3) und den Spindel-Spindelmutter-Getrieben (19) ein Zwischengetriebe (20) geschaltet ist

13. Antriebsanordnung nach einem der vorhergehenden Ansprüche, **dadurch gekennzeichnet, daß** die Antriebsmotoren (3) als Gleichstrommotoren ausgestaltet sind.

14. Antriebsanordnung nach einem der vorhergehenden Ansprüche, **dadurch gekennzeichnet, daß** das Verschlußelement (1) als Klappe eines Kraftfahrzeugs, vorzugsweise als Heckklappe (1) oder als Heckdeckel, ausgestaltet ist.

15. Verschlußelementanordnung, insbesondere Heckklappenanordnung, in einem Kraftfahrzeug, mit einem verstellbaren Verschlußelement (1) und mit einer Antriebsanordnung nach Anspruch 1 zur motorischen Verstellung des Verschlußelements (1), **dadurch gekennzeichnet,**
**daß** die Gewichtskraft des Verschlußelements (1) in Schließrichtung wirkt.

## Claims

1. Drive arrangement for motor-operated adjustment of a closure element (1) in a motor vehicle, wherein at least one drive (2) with a drive motor (3), and a drive controller (5) are provided, wherein the closure element (1) can be driven in the motor-operated adjustment mode by means of the drive motor (3) in the closing direction and in the opening direction between a closed position and an open position, wherein the drive (2) is of non-self-locking design, wherein the drive (2) has a sensor, in particular a Hall sensor, for sensing the drive movement, wherein the drive controller (5) monitors the sensor signals for a fault state, and when a fault state is sensed said drive controller (5) initiates an emergency braking mode and/or an emergency stop mode,
**characterized**
**in that** the drive arrangement comprises two drives (2) each with a sensor for determining the respective drive movement, and in that, in order to detect fault-induced slamming shut of the closure element (1), e.g. if one of the two drives of the drive arrangement becomes disengaged from the closure element, the drive controller (5) correlates the sensor signals of the two sensors with one another, in particular compares said sensor signals with one another.

2. Drive arrangement according to Claim 1, **characterized in that**, in order to detect fault-induced slamming shut of the closure element (1), the drive controller (5) monitors the sensor signals for sudden signal deviations.

3. Drive arrangement according to one of the preceding claims, **characterized in that** the drive arrangement initiates an emergency braking mode and/or an emergency stop mode only for that drive (2) which follows a fault-induced slamming shut movement of the closure element (1).

4. Drive arrangement according to one of the preceding claims, **characterized in that**, in order to detect fault-induced slamming shut of the closure element (1), the drive controller (5) monitors the upward transgression of a predetermined limiting difference in the drive speed or the drive travel of the two drives (2).

5. Drive arrangement according to one of the preceding claims, **characterized in that** the drive controller (5) monitors the sensor signals for the fault state of a sudden drive movement in the opening direction, caused, in particular, by prestressing of the drive (2), preferably **in that** the drive arrangement initiates an emergency braking mode and/or an emergency stop mode only for that drive (2) for which no sudden drive movement in the opening direction has been sensed.

6. Drive arrangement according to one of the preceding claims, **characterized in that**, in order to initiate the emergency braking mode and/or the emergency stop mode, the drive arrangement has an actuable brake arrangement, and **in that** the drive controller (5) correspondingly actuates the brake arrangement.

7. Drive arrangement according to one of the preceding claims, **characterized in that**, in order to initiate the emergency braking mode and/or the emergency stop mode, the drive controller (5) actuates the drive motors (3) in such a way that said drive motors (3) act in a braking fashion on adjustment of the closure element (1).

8. Drive arrangement according to one of the preceding claims, **characterized in that** the drive controller (5) comprises a control loop (7) for controlling the motor-operated adjustment of the closure element (1), **in that** the control loop (7) generates a manipulated variable (9) in the motor-operated adjustment mode on the basis of a control error, and **in that** the drive motors (3) act in a controlled driving fashion or controlled braking fashion as a function of the manipulated variable (9).

9. Drive arrangement according to one of the preceding claims, **characterized in that**, in order to generate a braking effect for the emergency braking mode and/or the emergency stop mode, the drive controller (5) connects the drive motor (3) to a short circuit (18), preferably **in that**, in order to generate a braking effect, the drive controller (5) connects the drive motors (3) in a pulsed fashion to a short circuit (18), preferably **in that** the pulsed connection takes place in pulse width modulation.

10. Drive arrangement according to Claim 9, **characterized in that** the short circuit (18) is configured in the manner of an ideal electrical short-circuit bridge, or **in that** the short circuit (18) is configured in the manner of a resistance bridge, preferably **in that** the effect of the short circuit (18) can be set by means of the drive controller (5) **in that** the resistance value of the resistance bridge can be set by means of the drive controller (5).

11. Drive arrangement according to one of the preceding claims, **characterized in that**, in order to generate a braking effect, the drive controller (5) applies a countervoltage and/or a countercurrent to the drive motor (3), which countervoltage and/or countercurrent counteracts the respective adjustment movement, preferably **in that**, the drive controller (5) applies a pulsed countervoltage and/or a pulsed countercurrent to the drive motors (3), and further preferably **in that** the countervoltage and/or the countercurrent are/is pulsed in the manner of a pulse width signal.

12. Drive arrangement according to one of the preceding claims, **characterized in that** the drives (2) have a spindle/spindle nut mechanism (19) which is connected downstream of the drive motors (3), preferably **in that** an intermediate mechanism (20) is connected between the drive motors (3) and the spindle/spindle nut mechanisms (19).

13. Drive arrangement according to one of the preceding claims, **characterized in that** the drive motors (3) are configured as direct current motors.

14. Drive arrangement according to one of the preceding claims, **characterized in that** the closure element (1) is configured as a flap of a motor vehicle, preferably as a tailgate (1) or as a trunk lid.

15. Closure element arrangement, in particular tailgate arrangement, in a motor vehicle, having an adjustable closure element (1) and having a drive arrangement according to Claim 1 for motor-operated adjustment of the closure element (1),
**characterized**
**in that** the weight of the closure element (1) acts in the closing direction.

## Revendications

1. Agencement d'entraînement pour le déplacement motorisé d'un élément de fermeture (1) dans un véhicule automobile, au moins un entraînement (2) doté d'un moteur d'entraînement (3) et une commande d'entraînement (5) étant prévus, l'élément de fermeture (1) étant entraîné dans le mode de déplacement motorisé à l'aide du moteur d'entraînement (3) dans la direction de fermeture et dans la direction d'ouverture, entre une position de fermeture et une position d'ouverture, l'entraînement (2) étant configuré de façon à être sans blocage automatique, l'entraînement (2) comportant un capteur, notamment un capteur à effet de Hall, pour détecter le mouvement d'entraînement, la commande d'entraînement (5) surveillant les signaux de capteur pour voir si un état d'anomalie survient et en cas d'apparition d'un état d'anomalie, passant en mode de freinage d'urgence et/ou en mode d'arrêt d'urgence, **caractérisé en ce que** l'agencement d'entraînement comprend deux entraînements (2) avec respectivement un capteur pour déterminer le mouvement d'entraînement respectif et que la commande d'entraînement (5) corrêle entre eux, notamment compare entre eux, les signaux de capteur des deux capteurs pour détecter une fermeture anormale de l'élément de fermeture (1), par exemple lorsqu'un des deux entraînements de l'agencement d'entraînement sort de prise de l'élément de fermeture.

2. Agencement d'entraînement selon la revendication 1, **caractérisé en ce que** la commande d'entraînement (5) surveille les signaux de capteur à la recherche de brusques écarts de signal pour détecter une fermeture anormale de l'élément de fermeture (1).

3. Agencement d'entraînement selon l'une quelconque des revendications précédentes, **caractérisé en ce que** l'agencement d'entraînement ne passe dans un mode de freinage d'urgence et/ou un mode d'arrêt d'urgence suivant un mouvement de fermeture anormal de l'élément de fermeture (1) que pour l'entraînement (2).

4. Agencement d'entraînement selon l'une quelconque des revendications précédentes, **caractérisé en ce que** la commande d'entraînement (5) surveille le dépassement d'une différence de limite prédéfinie dans la vitesse d'entraînement ou la course d'entraînement des deux entraînements (2) pour détecter une fermeture anormale de l'élément de fermeture (1).

5. Agencement d'entraînement selon l'une quelconque des revendications précédentes, **caractérisé en ce que** la commande d'entraînement (5) surveille les signaux de capteur à la recherche d'un état d'anomalie indiquant un mouvement d'entraînement brusque, provoqué notamment par une précontrainte de l'entraînement (2) dans la direction d'ouverture et que de préférence l'agencement d'entraînement ne passe dans un mode de freinage d'urgence et/ou un mode d'arrêt d'urgence que pour l'entraînement (2) pour lequel aucun mouvement d'entraînement brusque n'a été détecté dans la direction d'ouverture.

6. Agencement d'entraînement selon l'une quelconque des revendications précédentes, **caractérisé en ce que** l'agencement d'entraînement comporte un agencement de frein excitable et que la commande d'entraînement (5) excite de façon correspondante l'agencement de frein pour passer en mode de freinage d'urgence et/ou en mode d'arrêt d'urgence.

7. Agencement d'entraînement selon l'une quelconque des revendications précédentes, **caractérisé en ce que** la commande d'entraînement (5) excite les moteurs d'entraînement (3) pour passer en mode de freinage d'urgence et/ou en mode d'arrêt d'urgence de telle sorte qu'ils ont une action de freinage par rapport à un déplacement de l'élément de fermeture (1).

8. Agencement d'entraînement selon l'une quelconque des revendications précédentes, **caractérisé en ce que** la commande d'entraînement (5) comprend un circuit de réglage (7) pour régler le déplacement motorisé de l'élément de fermeture (1), que le circuit de réglage (7) produit une grandeur de déplacement (9) dans le mode de déplacement motorisé sur la base d'un écart de réglage et que les moteurs d'entraînement (3) ont une action de freinage régulée ou d'entraînement régulé en fonction de la grandeur de déplacement (9).

9. Agencement d'entraînement selon l'une quelconque des revendications précédentes, **caractérisé en ce que** la commande d'entraînement (5) connecte les moteurs d'entraînement (3) pour produire une action de freinage pour le mode de freinage d'urgence et/ou le mode d'arrêt d'urgence avec un court-circuit (18), de préférence que la commande d'entraînement (5) connecte les moteurs d'entraînement (3) pour produire une action de freinage pulsée avec un court-circuit (18) et de préférence que la connexion pulsée se produit par modulation de largeur d'impulsion.

10. Agencement d'entraînement selon la revendication 9, **caractérisé en ce que** le court-circuit (18) est configuré à la façon d'un pont électrique de court-circuit idéal ou que le court-circuit (18) est configuré à la façon d'un pont de résistance, de préférence que l'action du court-circuit (18) est réglable à l'aide de la commande d'entraînement (5) en réglant la valeur de résistance du pont de résistance à l'aide de la commande d'entraînement (5).

11. Agencement d'entraînement selon l'une quelconque des revendications précédentes, **caractérisé en ce que** la commande d'entraînement (5) sollicite les moteurs d'entraînement (3) pour produire une action de freinage avec une contre-tension et/ou avec un contre-courant agissant à l'encontre du et/ou des mouvements de réglage respectifs, de préférence que la commande d'entraînement (5) sollicite les moteurs d'entraînement (3) pour produire une action de freinage avec une contre-tension pulsée et/ou un contre-courant pulsé et de façon davantage préférée que la contre-tension et/ou le contre-courant soient pulsés à la façon d'un signal de largeur d'impulsion.

12. Agencement d'entraînement selon l'une quelconque des revendications précédentes, **caractérisé en ce que** les entraînements (2) comportent un engrenage à axe/écrou d'axe (19) connecté en aval des moteurs d'entraînement (3), de préférence qu'un engrenage intermédiaire (20) est connecté entre les moteurs d'entraînement (3) et les engrenages à axe/écrou d'axe (19).

13. Agencement d'entraînement selon l'une quelconque des revendications précédentes, **caractérisé en ce que** les moteurs d'entraînement (3) sont configurés comme des moteurs à courant continu.

14. Agencement d'entraînement selon l'une quelconque des revendications précédentes, **caractérisé en ce que** l'élément de fermeture (1) est configuré sous la forme d'un hayon de véhicule automobile, de préférence d'un hayon arrière (1) ou d'un capot arrière.

15. Agencement d'élément de fermeture, notamment agencement de hayon arrière, dans un véhicule automobile, avec un élément de fermeture (1) mobile et avec un agencement d'entraînement selon la revendication 1 pour le déplacement motorisé de l'élément de fermeture (1), **caractérisé en ce que** le poids de l'élément de fermeture (1) agit dans la direction de fermeture.
